Europäisches Patentamt

(19) European Patent Office

Office européen des brevets

(11) Publication number: **0 256 003 B1**

(12) **EUROPEAN PATENT SPECIFICATION**

(45) Date of publication of patent specification:
**17.04.91 Bulletin 91/16**

(21) Application number: **86901219.5**

(22) Date of filing: **31.01.86**

(86) International application number:
**PCT/US86/00192**

(87) International publication number:
**WO 87/04637 13.08.87 Gazette 87/18**

(51) Int. Cl.⁵: **B01D 1/18**

(54) **PROCESS FOR CONVERTING A THERMOPLASTIC POLYMER INTO SPHEROIDAL AGGLOMERATED GRANULES.**

The file contains technical information submitted after the application was filed and not included in this specification

(43) Date of publication of application:
**24.02.88 Bulletin 88/08**

(45) Publication of the grant of the patent:
**17.04.91 Bulletin 91/16**

(84) Designated Contracting States:
**BE DE FR GB IT NL SE**

(56) References cited:
**US-A- 3 508 339**
**US-A- 4 212 967**
**No relevant documents have been disclosed.**

(73) Proprietor: **THE DOW CHEMICAL COMPANY**
**2030 Dow Center Abbott Road P.O. Box 1967**
**Midland Michigan 48640-1967 (US)**

(72) Inventor: **WALKO, Lee, E.**
**103 Pin Oak Street**
**Lake Jackson, TX 77566 (US)**
Inventor: **SWANSON, Norman**
**53 Yaupon Court**
**Lake Jackson, TX 77566 (US)**
Inventor: **WALLACE, Stephen, B.**
**407 Jasmine Street**
**Lake Jackson, TX 77566 (US)**
Inventor: **COOK, Roy, M.**
**1500 Shanks Street**
**Angleton, TX 77515 (US)**

(74) Representative: **Casalonga, Axel et al**
**BUREAU D.A. CASALONGA - JOSSE**
**Morassistrasse 8**
**W-8000 München 5 (DE)**

EP 0 256 003 B1

## Description

This invention relates to a process for converting a solution of a thermoplastic polymer in a volatilizable solvent into a plurality of essentially spheroidal agglomerated granules.

It is well known in the art that various liquid foodstuffs such as milk, eggs, orange juice, and coffee, etc. can be spray dried by steam or hot air. In U.S. patent 3,039,107, dated 6-12-62, there is disclosed a method wherein these dried food products are agglomerated by contact with a spray of the untreated liquid food.

It is further known from the following patents that polymeric particulates and/or granules in water slurries can be produced from organic slurries or solutions of various polymers with steam precipitation :

U.S-A-2,592,814 (4-15-52)
U.S-A-3,050,113 (8-21-62)
U.S-A-3,202,647 (8-24-65)
U.S-A-3,287,301 (11-22-66)
U.S-A-3,306,342 (2-28-66)
U.S-A-3,427,370 (2-11-69)
U.S-A-3,450,184 (6-17-69)
U.S-A-3,596,700 (8-3-71)
U.S-A-3,862,103 (1-21-75)

The following patents show that it is known to produce dry or substantially dry polymeric granules from polymer solutions with steam precipitation :

U.S-A-3,508,339 (4-28-70)
U.S-A-3,804,145 (4-16-74)
U.S-A-3,968,003 (7-6-76)
U.S-A-4,209,912 (7-1-80)
U.S-A-4,212,967 (7-15-80)

In particualr, US-A-4 212 967 shows a process of producing particles of a thermoplastic polymer encorporating the pre-characterising Features of claim 1. The particle size distribution of these particles is broaden than those resulting from the process of claim 1.

In addition to the foregoing, it is known from U.S-A-4,252,968 (2-24-81) that polycarbonate powders prepared in U.S-A-4,212,967 can be agglomerated in a stirred and heated tubular drier wherein the powders are heated to 165-190°C.

While the above preparation of polymer granules in water slurries appears to be effective, it is a distinct disadvantage to subsequently separate out the water and remove the residual water absorbed therein. Furthermore, it is a distinct disadvantage in 4,252,968 to make polymer powders and subsequently agglomerate these in a rotating mechanical device which has the possibility of mechanical breakdowns.

This invention is directed to a process for converting a thermoplastic polymer in a solution of a volatilizable organic solvent into a plurality of essentially spheroidal agglomerated granules of relatively uniform sizes. The process of this invention comprises :

– passing said solution through a jet nozzle to form a high velocity stream,
– injecting super heated steam into said stream to form a turbulent suspension of fine polymer particulates in a gas stream of vaporized organic solvent and steam,
– passing said suspension into a uniformly heated serpentine tube having a series of semi-circular turns, and
– separating the solid particles obtained, and is characterized in that

(i) the speed of the high velocity stream is in the range from about 1 to 100 feet per second (0.3 to 30.5 m/s) ;

(ii) the serpentine tube has a uniform diameter and is constituted of a series of at least 6 semi-circular turns, each turn being connected to the following turn substantially without a straight intermediate portion and with at least some turns in an alternate direction as compared with other turns.

(iii) the residence time of said suspension in said tube is sufficient for a substantially complete agglomeration of said particulates to essentially spheroidal agglomerated granules of relatively uniform size.

Fig. 1 shows the apparatus used in the instant process which includes a steam precipitator 14, an agglomerization the 16, and a cyclone 22.

Fig. 2 shows a modification of the agglomerization the wherein the serpentine the of Fig. 1 is modified to include 360° turns.

Fig. 3 shows an isometric view of the tube and shell shown in Fig. 1.

Fig. 4 shows an isometric view of a modified tube and shell showing a series of 180° turns in a vertical plane combined with transverse 360° turns.

2

Fig. 5 is a cross section view of the steam precipitator taken on line 5-5 of Fig. 6.

Fig. 6 is an end view of the steam precipitator

In the drawings, the steam precipitator is generally shown at 14. An inlet pipe 10 conveys a polymer solution in an organic solvent to the precipitator 14 where it is contacted with superheated steam from the steam inlet 12. A connector pipe is shown at 15 which is screwed into and joins the steam precipitator 14 and the agglomerization tube 16. The necessary connecting couplers are not shown.

The tube 16 is supported by supports (not shown) in a heating shell 17 which is shown to be rectangular but can be cylindrical if desired. The shell 17 is heated to the proper drying temperature by process steam which comes in the inlet 18 and is removed by the outlet 20.

The particles which become granules are blown by the steam pressure into a cyclone separator 22 which has an upper outlet 24 for water vapor and organic solvent vapor and a lower outlet 26 for agglomerated granules.

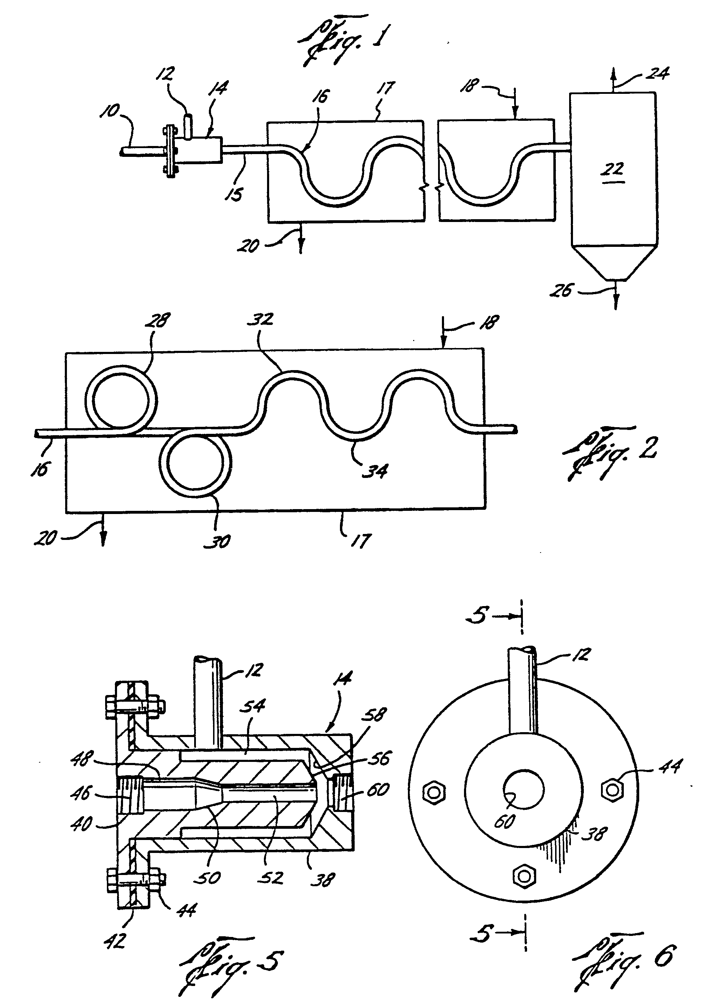

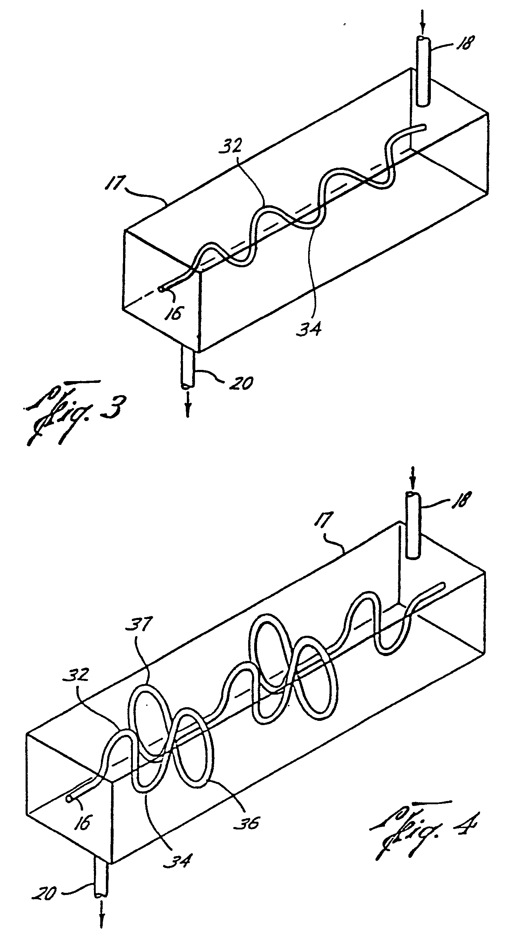

The tube 16 can have various configurations such as upper 360° turns 28 and lower 360° turns 30 as well as upper 180° turns 32 and lower 180° turns 34 and various combinations of these such as a series of 360° turns followed by a series of 180° turns or alternating 180° turns and 360° turns all in one vertical plane as is illustrated in Fig. 2.

In a similar manner, the 180° turns 32 and 34 can be alternated with transverse 360° turns 36 and 37 in a different plane as is illustrated in Fig. 4.

The polymer solution enters the steam precipitator 14 at the threaded inlet 46 and flows through the large internal bore 48 to the restriction 50 where the velocity is greatly increased. The polymer solution flows out of the jet nozzle 52 into the flow of superheated steam which flows from inlet 12 through internal space 54 around the conical bevel 56 and into the polymer solution at a velocity sufficient to disintregrate the solution into stream of fine particles suspended in the superheated steam which exits out of the threaded outlet 60.

The steam precipitator 14 is provided with an inner body 40 which is adjustable with respect to the outer body 38 by means of one or more shims 42. Fastening means such as bolts and nuts 44 are provided to keep the assembly together. By means of the shims 42 a proper spacing between the conical bevel 56 and the conical seat 58 is provided which will give a thin sheet of superheated steam at the proper velocity to break up the stream of polymer solution into fine particles.

In the process of this invention, a polymer solution in an organic solvent is pumped into a jet nozzle to form a stream having a velocity in the range from about 1 to 100 feet per second (0.3 to 30.5 m/s) and preferably 10 to 50 feet per second (3.0 to 15.2 m/s). While polymer solutions in methylene chloride, ethylene dichloride or monochlorobenzene are preferred, other thermoplastic polymers such as, for example, polyethylene, polystyrene, polybutadiene, and polyisoprene can also be processed when they are dissolved in suitable volatilizable organic solvents.

Superheated steam having a temperature in the range from 100 to 500°C and preferably in the range from 190 to 230°C is then injected in a conical stream into the polymer solution stream to break up the polymer solution into a fine mist of polymer particles suspended in the stream and vaporized solvent.

The suspension is blown into the agglomeration tube having a series of circular turns wherein the particles are heated by rolling contact with the hot inner walls of the tube so that they become sticky and adhere to each other but not to the walls of the tube due to the velocity of the gas stream through the tube. As the particles pass through the tube they constantly roll over and over due to the plurality of turns and become substantially larger and more or less spherical.

In the preferred form of the agglomeration tube, the tube consists of a serpentine tube having a series of 6 to 20 upper and lower 180° turns in the same plane. While the actual number of turns is not critical, it has been found that in general one must use at least 6 turns to achieve adequate rounding of the granules and, on the other hand, a number greater than 20 requires a greater gas pressure to push the granules through the tube or pipe turns and can cause partial or complete blockage of the tube. The same design criteria applies to the other more complex configurations.

The exterior walls of the tube are heated by process steam so as to maintain a uniform temperature in the range from 80°C to 170°C and preferably a range from 125°C to 150°C.

In general, the residence time of the particles in the tube is in the range from 0.01 to 60 seconds and preferably in the range from 0.1 to 2 seconds. It is to be understood that the residence time is a direct function of several variables such as the feed rates of the superheated steam and/or the polymer solution, the temperature of the superheated steam and the temperature of the process steam used to heat the agglomeration tube. In any event, the residence time is so chosen that the particulates are substantially completely agglomerated into larger sized granules of a random shape which can generally be described as rounded, spheroidal, bead-shaped, etc. Some of the granules are oblate spheriods and some are rather like flat pebbles but the majority appear to be essentially spheroidal. An important feature of this invention is that the granules are of an essentially

3

uniform size range or mesh range with very little dust or powder.

The granules are carried by the gas stream into a conventional cyclone separator wherein the organic solvent vapor and water vapor are taken overhead for recovery of the solvent by condensation. The granules are removed from the bottom and are further processed by mechanical indirect steam dryers to remove residual water and solvent before being processed in a conventional vented extruder and chopper to achieve polycarbonate pellets of suitable purity for molding and/or sale.

The invention is further illustrated by the following examples :

## Example 1

300 lb./hr. (37.8 g/s) of a 10 percent polycarbonate solution at 25°C using methylene chloride as the solvent was fed to a steam precipitator as shown in Fig. 1 of the drawings. 115.5 lb./hr. (14.55 g/s) of 200 psig (1.38 MPa gage) utility steam (200°C) was also applied to the precipitator.

The internal dimensions of the precipitator were 0.312″ (7.92 mm) I.D. on the polycarbonate injection barrel and 0.375″ (9.52 mm) I.D. on the mixing throat. The steam flow area was adjusted to give a 30 psi (207 kPa) pressure drop across the annulus.

A fine dispersion of minute polycarbonate particulates was formed in the mixer. The particulates were then carried into the agglomeration tube. The particulates were in a tacky state and were recombined into a spherical-like granules. This was done thru the alternating circular turns in the agglomeration tube. The tube was made of 3/8″ (9.525 mm) stainless steel tubing with an I.D. of 0.305″ (7.75 mm) and was 7′ (2.1 m) in length. The tube contained 20 bends of 180° each similar to Fig. I of the drawing wherein each bend had an inside radius of about one inch (25 mm).

Eighteen lb./hr. (2.27 g/s) of 40 psig (276 kPa gage) utility steam (132°C) was used to control the heat to the shell. The average heat transfer coefficient for the shell was 135 BTU/hr. ft.$^2$-°F (767 W/(m$^2$.K)).

The final polycarbonate granules obtained from the cyclone contained 40% H$_2$O, by weight and 1.5 percent methylene chloride. The dry bulk density of the polycarbonate granules was 0.2 grams per cubic centimeter. The product distribution was between #4 and #12 mesh (4.75 mm and 1.68 mm) (U.S. Sieve Series) with 86% by weight in the #4 to #8 mesh range (4.75 and 2.38 mm).

## Examples 2-7

A 10 percent by weight polycarbonate solution in methylene chloride (feed solution) was fed at various rates in pounds per hour (g/s) to a steam precipitator as shown in Fig. 1 of the drawings using essentially the process parameters of Example 1. The apparatus had an agglomeration tube made from a 0.625 inch (15.875 mm) outside diameter 316 stainless steel tube having a wall thickness of 18 BWG gage or 0.048 inches (1.22 mm). The tube was bent into a series of 15 turns of 180° with an inside radius of 2.625 inches (66.675 mm).

The superheated steam rate was also varied to give a constant polymer solution to steam ratio of 3.95 to 1.

The recovered granules were given a sieve analysis and the results of each example are set forth in Table I.

EP 0 256 003 B1

TABLE I

| Example | Polymer Solution Feed Rate lbs./hr (g/s) | U.S. Sieve Analysis (% of Total wt.) | | | |
|---|---|---|---|---|---|
| | | >3 (>6.73 mm) | >4 (> 4.75 mm) | >8 (>2.38 mm) | <8 (<2.38 mm) |
| 2 | 1040 (131.0) | 28.8 | 56.2 | 14.5 | 0.5 |
| 3 | 1000 (126.0) | 29.6 | 55.6 | 14.6 | 0.2 |
| 4 | 950 (119.7) | 22.7 | 55.4 | 21.9 | 0.1 |
| 5 | 900 (113.4) | 20.1 | 53.7 | 25.7 | 0.4 |
| 6 | 875 (110.2) | 20.4 | 53.3 | 25.9 | 0.4 |
| 7 | 850 (107.1) | 17.6 | 46.4 | 35.6 | 0.3 |

The above data indicates that the process of this invention produces a mixture of various size granules wherein a substantial majority of the granules are greater than U.S. Sieve #4 (0.187 inches or 4.76 mm) and very few of the granules are less than U.S. Sieve #8 (0.0937 inches or 2.38 mm).

## Claims

1. A process for converting a thermoplastic polymer in a solution of a volatilizable organic solvent into a plurality of solid particles which process comprises :
– passing said solution through a jet nozzle to form a high velocity stream,
– injecting super heated steam into said stream to form a turbulent suspension of fine polymer particulates in a gas stream of vaporized organic solvent and steam,
– passing said suspension into a uniformly heated serpentine tube having a series of semi-circular turns, and
– separating the solid particles obtained
characterized in that
(i) the speed of the high velocity stream is in the range from about 1 to 100 feet per second (0.3 to 30.5 m/s) ;
(ii) the serpentine tube has a uniform diameter and is constituted of a series of at least 6 semi-circular turns, each turn being connected to the following turn substantially without a straight intermediate portion and with at least some turns in an alternate direction as compared with other turns.
(iii) the residence time of said suspension in said tube is sufficient for a substantially complete agglomeration of said particulates to essentially spheroidal agglomerated granules of relatively uniform size.
2. Process according to claim 1 characterized in that all the turns of the tube are in the same plane.
3. Process according to claim 1 characterized in that some turns of the tube are alternated with turns located in a different plane.
4. The process of any one of Claims 1-3 wehrein said superheated steam has a temperature in the range from 100° to 500°C, said heated tube has a temperature in the range from 80° to 170°C, and said residence time is in the range from 0.01 to 60 seconds.
5. The process of any one of claims 1-4 wherein said superheated steam has a temperature in the range from 190° to 230°C, said heated tube has a temperature in the range from 125° to 150°C, and said residence time is in the range from 0.1 to 2 seconds.
6. The process of any of Claims 1-5 wherein the thermoplastic polymer is a polycarbonate polymer.

## Ansprüche

1. Verfahren zum Überführen eines thermoplastischen Polymers in einer Lösung eines flüchtigen organischen Lösungsmittels in eine Vielzahl von festen Teilchen, wobei das Verfahren umfaßt :
– Leiten der Lösung durch eine Strahldüse, um einen Hochgeschwindigkeits-Strom zu erzeugen,
– Einspritzen von überhitztem Dampf in den Strom, um eine turbulente Suspension feiner Polymerpartikel in einem Gasstrom von verdampftem organischen Lösungsmittel und Dampf zu bilden,
– Leiten der Suspension in ein gleichförmig erhitztes Schlangenrohr mit einer Reihe von halbkreisförmigen Windungen, und
– Abtrennen der erhaltenen festen Teilchen, **dadurch gekennzeichnet,** daß
(i) die Geschwindigkeit des Hochgeschwindigkeits-Stroms im Bereich von etwa 1 bis 100 Fuß pro Sekunde (0,3 bis 30,5 m/s) ist ;
(ii) das Schlangenrohr einen gleichförmigen Durchmesser hat und aus einer Reihe von mindestens 6 halbkreisförmigen Windungen gebildet wird, wobei jede Windung mit der folgenden Windung im wesentlichen ohne gerades Zwischenstück verbunden ist und mindestens einige Windungen in einer veränderten Richtung im Vergleich zu anderen Windungen aufweist ;
(iii) die Verweildauer der Suspension im Rohr ausreichend für eine im wesentlichen vollständige Agglomeration der Partikel zu im wesentlichen sphäroidalen agglomerierten Körnern von relativ gleichförmiger Größe ist.
2. Verfahren nach Anspruch 1, **dadurch gekennzeichnet,** daß alle Windungen des Rohrs in derselben Ebene sind.
3. Verfahren nach Anspruch 1, **dadurch gekennzeichnet,** daß einige Windungen des Rohrs sich mit Windungen abwechseln, die sich in einer unterschiedlichen Ebene befinden.

6

4. Verfahren nach einem der Ansprüche 1-3, worin der überhitzte Dampf eine Temperatur im Bereich von 100° bis 500°C hat, das erhitzte Rohr eine Temperatur im Bereich von 80° bis 170°C hat, und die Verweildauer im Bereich von 0,01 bis 60 Sekunden ist.

5. Verfahren nach einem der Ansprüche 1-4, worin der überhitzte Dampf eine Temperatur im Bereich von 190° bis 230°C hat, das erhitzte Rohr eine Temperatur im Bereich von 125° bis 150°C hat, und die Verweildauer im Bereich von 0,1 bis 2 Sekunden ist.

6. Verfahren nach einem der Ansprüche 1-5, worin das thermoplastische Polymer ein Polycarbonatpolymer ist.

## Revendications

1. Procédé pour convertir un polymère thermoplastique, en solution dans un solvant organique volatilisable, en une pluralité de particules solides, lequel procédé comprend :
   – le passage de ladite solution à travers un éjecteur pour former un courant à haute vitesse,
   – l'injection de vapeur surchauffée dans ledit courant, pour former une suspension turbulente de fines particules de polymère dans un courant gazeux de solvant organique vaporisé et de vapeur,
   – le passage de ladite suspension dans un serpentin chauffé uniformément, comportant une série de boucles semi-circulaires, et
   – la séparation des particules solides obtenues,
   caractérisé en ce que
   (i) la vitesse du courant de haute vitesse se situe dans l'intervalle d'environ 1 à 100 pieds par seconde (0,3 à 30,5 m/s) ;
   (ii) le serpentin possède un diamètre uniforme et est constitué d'une série d'au moins 6 boucles semi-circulaires, chaque boucle étant reliée à la suivante pratiquement sans portion rectiligne intermédiaire et au moins quelques boucles étant de direction alternée par rapport aux autres boucles ;
   (iii) le temps de séjour de ladite suspension dans ledit tube est suffisant pour une agglomération pratiquement complète desdites particules en granulés agglomérés pratiquement sphéroïdaux de dimension relativement uniforme.

2. Procédé conforme à la revendication 1, caractérisé en ce que toutes les boucles du tube se trouvent dans le même plan.

3. Procédé conforme à la revendication 1, caractérisé en ce que quelques boucles du tube alternent avec des boucles situées dans un plan différent.

4. Procédé selon l'une quelconque des revendications 1 à 3, dans lequel ladite vapeur surchauffée est à une température située dans l'intervalle de 100 à 500°C, ledit tube chauffé est à une température située dans l'intervalle de 80 à 170°C, et ledit temps de séjour se situe dans l'intervalle de 0,01 à 60 secondes.

5. Procédé selon l'une quelconque des revendications 1 à 4, dans lequel ladite vapeur surchauffée est à une température située dans l'intervalle de 190 à 230°C, ledit tube chauffé est à une température située dans l'intervalle de 125 à 150°C, et ledit temps de séjour se situe dans l'intervalle de 0,1 à 2 secondes.

6. Procédé selon l'une quelconque des revendications 1 à 5, dans lequel le polymère thermoplastique est un polymère polycarbonate.

Fig. 1

Fig. 2

Fig. 5

Fig. 6

Fig. 3

Fig. 4